# EUROPÄISCHE PATENTSCHRIFT

(11) **EP 0 573 764 B1**
(45) Veröffentlichungstag und Bekanntmachung des Hinweises auf die Patenterteilung: **13.09.1995**
(21) Anmeldenummer: 93106728.4
(22) Anmeldetag: 26.04.1993
(51) Int. Cl.: F01N 7/18, F16L 27/10

(54) **Gelenkige Verbindung von Rohrteilen, insbesondere bei Abgasleitungen von Kraftfahrzeugen**
Articulated connection of pipe parts, particularly in exhaust systems of motor vehicles
Joint articulé d'éléments de tube, notamment dans des conduits d'échappement de véhicules automobiles

(30) Priorität: 12.06.1992 DE 4219241
(43) Veröffentlichungstag der Anmeldung: 15.12.1993
(73) Patentinhaber: Witzenmann GmbH Metallschlauch-Fabrik Pforzheim, D-75175 Pforzheim (DE)
(72) Erfinder: Leidig, Hans-Jürgen, W-7130 Mühlacker (DE); Wünschman, Manfred, W-7507 Söllingen-Pfinztal (DE)
(74) Vertreter: Lemcke, Rupert, Dipl.-Ing.

(56) Entgegenhaltungen:
- DE-A- 3 610 684
- DE-A- 4 219 241

## Beschreibung

Die Erfindung betrifft eine gelenkige Verbindung von Rohrteilen, insbesondere bei Abgasleitungen von Kraftfahrzeugen, bestehend aus mindestens einem flexiblen, wenigstens mittelbar mit den Rohrteilen verbundenen Leitungselement in Form eines Wellrohres, Metallbalges, Metallschlauches oder dergleichen sowie einem innerhalb des Leitungselementes angeordneten, mit einem Ende am dortigen Rohrteil gegebenenfalls zusammen mit dem Leitungselement befestigten Innenschutzrohr, dessen anderes, freies Ende über wenigstens ein ringförmig umlaufendes Stützpolster mit gedampft federnden Eigenschaften mit einem dieses umschließenden und am anderen Rohrteil befestigten Stützteil in angular zueinander beweglich geführter, gegenseitig tragender Verbindung steht, wobei das Stützpolster beidseits in Axial- und Radialrichtung gegen das Innenschutzrohr und/oder das Stützteil in Anlage ist.

Verbindungen dieser Gattung sind durch die DE-OS 35 24 931 und die DE-OS 36 10 684 bekannt. Im erstgenannten Falle ist das Leitungselement mit beiden Rohrteilen verbunden und es befindet sich das Stützteil zusammen mit dem Stützpolster innerhalb des Leitungselementes. Im zweiten Falle ist die Anordnung so getroffen, daß das Leitungselement mit dem dem anderen Rohrteil abgewandten Ende des Stützteiles verbunden ist, und daß das Innenschutzrohr in seiner Länge die des Leitungselementes überragend mit seinem freien Ende zur Bildung der beweglich geführten Verbindung in das Stützteil ragt. Die Erfindung soll sich auf beide dieser grundsätzlichen Bauformen erstrecken.

Die in Rede stehende Verbindung dient insbesondere bei Kraftfahrzeugen mit quer liegenden Motoren dazu, Relativbewegungen zwischen diesen und der Abgasanlage zuzulassen, indem sie die an sie angeschlossenen Rohrteile gedämpft federnd gelenkig und tragend miteinander verbindet und gegenseitig schwingungstechnisch entkoppelt. Dabei löst die bekannte Verbindung die Aufgabe, außerhalb des Leitungselementes ausladend angebrachte Verbindungsglieder zwischen den Rohrteilen zu vermeiden und das Leitungselement gegenüber dem Gasstrom weitestgehend abzuschirmen. Was die der Abdichtung und gedämpft federnden mechanischen Verbindung dienenden Stützpolster betrifft, so sind diese aus temperaturbeständigem, korrosionsbeständigem und warmfestem Keramik- oder Metallmaterial in Form eines Faser- oder Drahtvlieses, -geflechtes, -gewebes, -gestrickes oder dergleichen gepreßt und gegebenenfalls mit einem Material mit Gleitlagereigenschaften beschichtet oder versetzt. Gestalt und Ausführung der Stützpolster richten sich nach der geforderten Kraft-Weg-Charakteristik, Beweglichkeit, Betriebstemperatur, Dämpfung und Lebensdauer.

Wenn auch die bekannten Verbindungen sehr gute Gebrauchseigenschaften gezeigt haben, so hat es sich doch in einigen Fällen als nachteilig erwiesen, daß die Verbindung Torsionsbewegungen zwischen den Rohrteilen nur wenig oder überhaupt nicht abdämpfen können, so daß diese vollständig auf das Leitungselement durchschlagen können. Torsionsbelastungen werden jedoch von Leitungselementen in Form der eingangs genannten Wellrohre, Metallbälge etc. schlecht vertragen, so daß es hier zu einem vorzeitigen Ausfall der Verbindung durch Beschädigung des Leitungselementes kommen kann.

Aufgabe der Erfindung ist es, eine Verbindung der eingangs genannten Art derart weiter zu gestalten, daß das Leitungselement vor einer Torsionsbelastung geschützt ist. Die Aufgabe soll in einfacher Weise möglichst unter Verwendung der bereits vorhandenen Bauteile bewältigt werden.

Ausgehend von einer Verbindung der eingangs genannten Art ist diese Aufgabe erfindungsgemäß dadurch gelöst, daß das freie Ende des Innenschutzrohres und das Stützteil durch wenigstens mittelbaren gegenseitigen formschlüssigen Eingriff gegen gegenseitige Torsionsbewegungen abgestützt sind.

Durch diese Maßnahme ist erreicht, daß bezüglich gegenseitiger Torsionsbewegung die Rohrteile unmittelbar gegeneinander abgestützt sind, so daß eine solche Torsionsbewegung nicht mehr an das Leitungselement gelangen und dieses beeinträchtigen kann. Dabei bleibt auf der anderen Seite die im übrigen bekannte gelenkige Verbindung der Rohrteile unbeeinträchtigt erhalten. Außerdem geschieht die Abstützung von Torsionsbewegungen mittels Innenschutzrohr und Stützteil durch ohnehin vorhandene Bauteile, so daß Größe und Betriebsverhalten der gelenkigen Verbindung gegenüber dem Bekannten an sich keine Änderung erfahren.

Als zweckmäßig hat es sich erwiesen, daß die Wandung des Innenschutzrohres radial nach außen ragende und die Wandung des Stützteils radial nach innen ragende Vorsprünge aufweisen, und daß die Vorsprünge in den Querschnitt des Stützpolsters ragen. Damit wird das Stützpolster zum Mittler für die formschlüssige Verbindung zwischen Innenschutzrohr und Stützteil, wobei sich über die Festigkeit des Stützpolsters ebenso die Festigkeit der Abstützung gegen Torsionsbewegungen einstellen bzw. bestimmen läßt, wobei in diesem Falle harte Torsionsstöße etwas abgedämpft werden, ohne daß das Leitungselement unzulässig belastet würde, was für die Lebensdauer der beteiligten Bauteile von Vorteil sein kann.

In Ausbildung dieses Lösungsweges kann es zweckmäßig sein, daß die Vorsprünge die Form von zur Rohrverbindung achsparallelen Rippen aufweisen. Diesen Rippen entsprechend kann das Stützpolster mit Nuten seines Außen- und Innenmantels vorgefertigt sein.

In diesem Zusammenhang kann es vorteilhaft sein, daß die Vorsprünge des Innenschutzrohres gegenüber den Vorsprüngen des Stützteiles insbesondere in Umfangsrichtung versetzt angeordnet sind, um den Querschnitt des Stützpolsters lokal nicht zu stark zu verkleinern. Zur Herstellung der Vorsprünge kann man zweckmäßigerweise so vorgehen, daß die Vorsprünge durch radiale Ausprägungen des Innenschutzrohres und/oder radiale Einprägungen des Stützteiles gebildet sind. In allen Fällen hat es sich als ausreichend erwiesen, wenn sowohl seitens des Innenschutzrohres als auch seitens des Stützteiles wenigstens drei Vorsprünge gleichmäßig über den Umfang verteilt angeordnet sind.

Nach einer anderen Bauform kann vorgesehen sein, daß das freie Ende des Innenschutzrohres außerhalb des Stützpolsters eine radial nach außen vorgedrückte Balgwelle aufweist, daß die Balgwelle mit achsparallelen, axial offenen, nutförmigen Ausnehmungen versehen ist, und daß das Stützteil über radial nach innen ragende Vorsprünge mit den Ausnehmungen in Eingriff ist. In Umkehrung dieser Bauform kann gleichermaßen auch so vorgegangen werden, daß das Stützteil außerhalb des Stützpolsters eine radial nach innen vorgedrückte Balgwelle aufweist, daß die Balgwelle mit achsparallelen, axial offenen, nutförmigen Ausnehmungen versehen ist, und daß das Innenschutzrohr über radial nach außen ragende Vorsprünge mit den Ausnehmungen in Eingriff ist.

In diesem Falle können die Vorsprünge durch einen mit dem Stützteil bzw. dem Innenschutzrohr verbundenen Ring gebildet sein, von dem aus sie beispielsweise in Form von Nasen vorstehen. Andererseits können die nutförmigen Ausnehmungen durch Eindrückungen oder Ausfräsungen der jeweiligen Balgwelle hergestellt werden.

Der genannte Ring kann in das Stützteil ein- bzw. auf das Innenschutzrohr aufgesetzt sein. Es besteht jedoch auch die Möglichkeit, daß Stützteil oder Innenschutzrohr entlang einer Radialebene geteilt sind, daß die Teile durch einen im wesentlichen rohrförmigen Ring miteinander verbunden sind, und daß die Vorsprünge durch Ein- bzw. Ausprägungen des Ringes gebildet sind.

All diese Ausführungsformen geben gegenüber der zuerst genannten die Möglichkeit einer spielfreien oder zumindest praktisch spielfreien Abstützung der Rohrteile gegen Torsionsbewegungen, wobei auf der anderen Seite trotzdem keinerlei Beeinträchtigung oder Behinderung der an sich bekannten Funktionsweise der gelenkigen Verbindung eintritt.

Weitere Merkmale und Einzelheiten der Erfindung ergeben sich aus der nachfolgenden Beschreibung von Ausführungsformen, die auf der Zeichnung dargestellt sind. In der Zeichnung zeigen:
- Figur 1: eine bekannte Gelenkverbindung zweier Rohrteile im seitlichen Halbschnitt;
- Figur 2: eine neue Gelenkverbindung im seitlichen Halbschnitt;
- Figur 3: eine Schnittansicht gemäß der Schnittlinie III-III in Figur 2;
- Figur 4: eine weitere Gelenkverbindung im seitlichen Halbschnitt;
- Figur 5: eine Schnittansicht gemäß der Schnittlinie V-V gemäß Figur 4 und
- Figur 6: die ausschnittweise Schnittansicht einer Variante zum Gegenstand gemäß Figur 4.

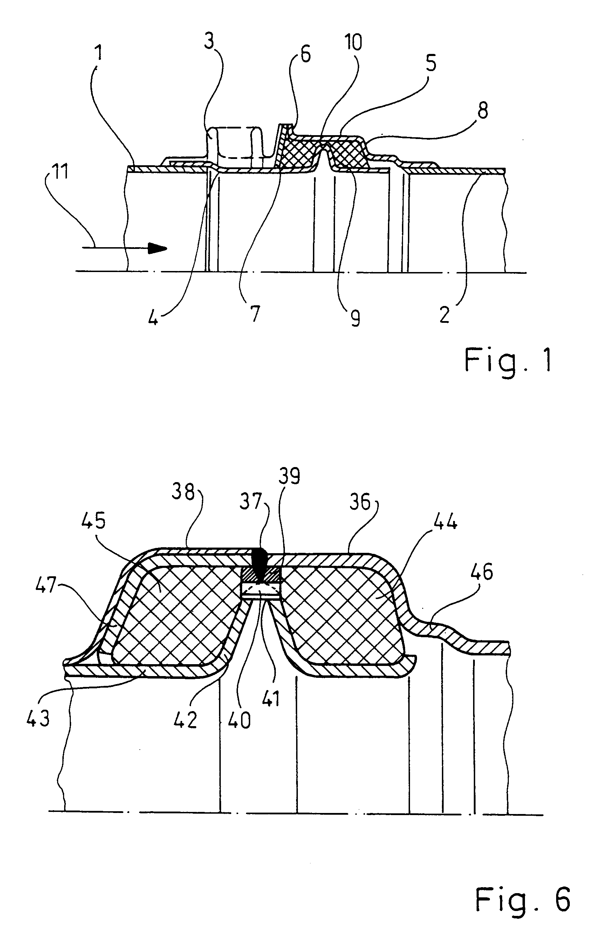

Figur 1 zeigt im seitlichen Halbschnitt zwei aufeinander zu gerichtete Rohrteile 1, 2. Mit dem Rohrteil 1 sind gemeinsam verbunden ein Leitungselement 3 in Form eines ringgewellten Balges sowie ein in dessen Innenraum angeordnetes Innenschutzrohr 4, das in seiner Länge die des Leitungselementes 3 überschreitet und so in ein zylindrisches Stützteil 5 ragt, das mit dem Rohrteil 2 fest verbunden ist. Mit dem freien Ende 6 des Stützteiles 5 ist das dem Rohrteil 1 abgewandte Ende des Leitungselementes 3 über einen schräg verlaufenden Zwischenring 7 verbunden, der dort gleichzeitig eine vom Stützteil 5 mittels einer im wesentlichen radial gerichteten Flanke 8 gebildete Kammer in Axialrichtung abschließt.

In der Kammer sind zwei ringförmig umlaufende Stützpolster 9 von innen am Stützteil 5 sowie in Axialrichtung gegen die Flanke 8 und den Zwischenring 7 anliegend angeordnet, die nach radial innen ihre Abstützung gegen das Innenschutzrohr 4 sowie dort in Axialrichtung gegen eine radial nach außen vorgedrückte Balgwelle 10 des Innenschutzrohres finden.

Durch diese bevorzugt in Richtung des Pfeiles 11 durchströmte Gelenkverbindung sind die Rohrteile 1 und 2 über die Kopplung des Innenschutzrohres 4 mittels der Stützpolster 9 mit dem Stützteil 5 in Grenzen angular gedämpft federnd und gegenseitig tragend miteinander verbunden, wobei das in der Leitung strömende Medium über die Stützpolster 9 praktisch keinen Zutritt nach außen bzw. in das Innere des Leitungselementes 3 hat. Andererseits überschreitet die Gelenkverbindung in Radialrichtung praktisch nicht das übliche durch das Leitungselement 3 und das Innenschutzrohr 4 gegebene Maß, wobei nach außen hin ein glattzylindrischer Abschluß ohne vorstehende Teile gegeben ist.

Die bekannte Gelenkverbindung gemäß Figur 1 bietet nun keine Abstützung von zwischen den Rohrteilen 1 und 2 auftretenden Torsionsbewegungen, so daß diese im Ergebnis voll vom Leitungselement 3 aufgenommen werden müssen, was jedoch von Leitungselementen in Form von Wellrohren oder Bälgen schlecht oder überhaupt nicht vertragen wird.

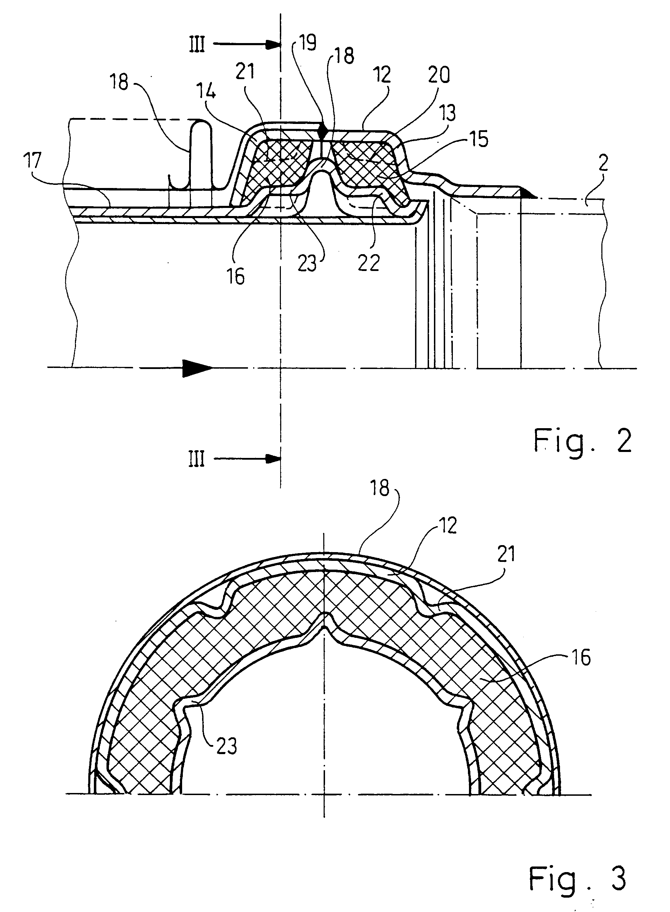

Um dem zu begegnen, dient eine erste Bauform, wie sie in den Figuren 2 und 3 dargestellt ist. Hier ist analog zu Figur 1 wieder ein Rohrteil 2 ersichtlich, an das sich ein Stützteil 12 anschließt und mit dem Rohrteil 2 fest verbunden ist. Im vorliegenden Falle bildet das Stützteil 12 zwischen Flanken 13 und 14 eine Kammer für zwei Stützpolster 15 und 16. Die die Stützpolster aufnehmende Kammer ist nach radial innen durch das freie Ende eines Innenschutzrohres 17 abgeschlossen, das mit einer Balgwelle 18 zwischen die beiden Stützringe 15 und 16 ragt.

Das dem Stützteil 12 zugewandte Ende des Leitungselementes 18 in Form eines Ringwellrohres ist bei 19 mit dem Stützteil 12 verschweißt dort, wo das Stützteil 12 eine umlaufende Naht aufweist, entlang derer es nach der Montage zusammengefügt ist.

Das andere Rohrteil sowie die dortige Anschlußverbindung mit dem Innenschutzrohr 17 sowie dem Leitungselement 18 sind nicht dargestellt. Sie sind wie in Figur 1 gestaltet.

Um nun zwischen den gelenkig miteinander verbundenen Rohrteilen auftretende Torsionsbewegungen vom Leitungselement 18 fernzuhalten, sind Innenschutzrohr 17 und Stützteil 12 durch mittelbaren gegenseitigen formschlüssigen Eingriff in Umfangsrichtung gegeneinander abgestützt. Dazu weist das Stützteil 12 radial nach innen gerichtete und achsparallele Einprägungen 20, 21 auf, während andererseits das Innenschutzrohr 17 mit nach radial außen gerichteten, axial parallelen Ausprägungen 22, 23 versehen ist. Die Einprägungen 20, 21 sind gegenüber den Ausprägungen 22, 23 in Umfangsrichtung versetzt angeordnet, so daß die Stützpolster 15, 16 keine zu große lokale Schwächung erfahren.

Um die Montage zu erleichtern, kann vorgesehen sein, daß die Stützpolster 15, 16 nutförmige Ausnehmungen aufweisen, die mit den Einprägungen 20, 21 bzw. den Ausprägungen 22, 23 korrespondieren.

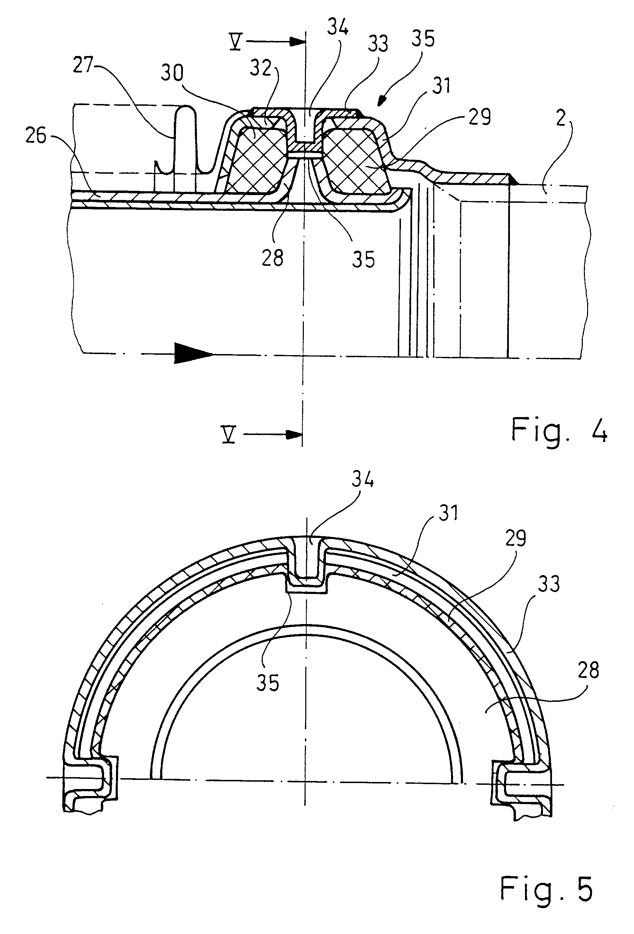

Während beim Beispiel gemäß Figur 2 und 3 Innenschutzrohr und Stützkörper noch indirekt über die Stützpolster hinsichtlich Torsionsbewegungen gegeneinander abgestützt sind, findet diese Abstützung bei der Ausführungsform gemäß Figur 4 und 5 unmittelbar statt. Bei diesem Beispiel sind wieder ersichtlich ein Rohrteil 1, ein Stützteil 25, ein Innenschutzrohr 26, ein Leitungselement 27 mit radial nach außen gerichteter Balgwelle 28, die zwischen zwei Stützpolster 29, 30 geht.

Wie aus Figur 4 ersichtlich, ist das Stützteil 25 aus zwei Teilen 31, 32 zusammengesetzt, die durch einen Ring 33 miteinander verbunden sind, der mit den Teilen 31, 32 verschweißt ist. Durch diese Verschweißung wird am Teil 32 auch gleichzeitig das Ende des Leitungselementes 27 festgelegt.

Der Ring 33 weist über den Umfang verteilt mehrere Einprägungen 34 auf, die in nutförmige, achsparallele Ausnehmungen bzw. Ausfräsungen 35 der Balgwelle 28 eingreifen und so ein gegenseitiges Verdrehen der beiden gelenkig miteinander verbundenen Rohrteile verhindern.

Während bei der Ausführungsform gemäß Figur 4 und 5 die radial nach innen gerichteten Vorsprünge des Stützteiles 25 durch napfförmige Eindrückungen 34 des Ringes 33 gebildet sind, zeigt schließlich Figur 6 noch in einer ausschnittweisen Darstellung einer andere Variante. Hier ist das Stützteil 36 an seiner umlaufenden Schweißnaht 37, mit der auch das Ende 38 eines Leitungselementes gefaßt wird, auf der Innenseite mit einem Ring 39 versehen, der mit über den Umfang verteilt angeordneten, nach radial innen ragenden Vorsprüngen 40 in Form von Zähnen oder dergleichen versehen ist. Diese greifen in Ausnehmungen bzw. Ausfräsungen 41 einer Balgwelle 42 ein, die am freien Ende eines Innenschutzrohres 43 gebildet ist und sich zwischen die Stützpolster 44 und 45 erstreckt, die auf der anderen Seite durch Flanken 46 und 47 des Stützteiles 36 gehalten sind. Auch hier ist eine in Umfangsrichtung spielfreie Abstützung von Stützteil 36 und Innenschutzrohr 43 gegen Torsionsbewegungen gegeben.

## Patentansprüche

1. Gelenkige Verbindung von Rohrteilen, insbesondere bei Abgasleitungen von Kraftfahrzeugen, bestehend aus mindestens einem flexiblen, wenigstens mittelbar mit den Rohrteilen verbundenen Leitungselement in Form eines Wellrohres, Metallbalges, Metallschlauches oder dergleichen sowie einem innerhalb des Leitungselementes angeordneten, mit einem Ende am dortigen Rohrteil gegebenenfalls zusammen mit dem Leitungselement befestigten Innenschutzrohr, dessen anderes, freies Ende über wenigstens ein ringförmig umlaufendes Stützpolster mit gedämpft federnden Eigenschaften mit einem dieses umschließenden und am anderen Rohrteil befestigten Stützteil in angular zueinander beweglich geführter, gegenseitig tragender Verbindung steht, wobei das Stützpolster beidseits in Axial- und Radialrichtung gegen das Innenschutzrohr und/oder das Stützteil in Anlage ist,
dadurch gekennzeichnet,
daß das freie Ende des Innenschutzrohres (17, 26, 43) und das Stützteil (12, 25, 36) durch wenigstens mittelbaren gegenseitigen formschlüssigen Eingriff gegen gegenseitige Torsionsbewegungen abgestützt sind.

2. Verbindung nach Anspruch 1,
dadurch gekennzeichnet,
daß die Wandung des Innenschutzrohres (17) radial nach außen ragende und die Wandung des Sützteiles (12) radial nach innen ragende Vorsprünge (20, 21; 22, 23) aufweisen, und daß die Vorsprünge in den Querschnitt des Stützpolsters (15, 16) ragen.

3. Verbindung nach Anspruch 2,
dadurch gekennzeichnet,
daß die Vorsprünge (20, 21; 22, 23) die Form von zur Rohrverbindung achsparallelen Rippen aufweisen.

4. Verbindung nach Anspruch 3,
dadurch gekennzeichnet,
daß das Stützpolster (15, 16) mit den Rippen (20, 21; 22, 23) entsprechenden Nuten seines Außen- und Innenmantels vorgefertigt ist.

5. Verbindung nach einem oder mehreren der Ansprüche 2 bis 4,
dadurch gekennzeichnet,
daß die Vorsprünge (22, 23) des Innenschutzrohres (17) gegenüber den Vorsprüngen (20, 21) des Stützteiles (12) insbesondere in Umfangsrichtung versetzt angeordnet sind.

6. Verbindung nach einem oder mehreren der Ansprüche 2 bis 5,
dadurch gekennzeichnet,
daß die Vorsprünge durch radiale Ausprägungen (22, 23) des Innenschutzrohres (17) und/oder radiale Einsprägungen (20, 21) des Stützteiles (12) gebildet sind.

7. Verbindung nach Anspruch 1,
dadurch gekennzeichnet,
daß das freie Ende des Innenschutzrohres (26, 43) außerhalb des Stützpolsters (29, 30; 44, 45) eine radial nach außen vorgedrückte Balgwelle (28, 42) aufweist, daß die Balgwelle mit achsparallelen, axial offenen, nutförmigen Ausnehmungen (35, 41) versehen ist, und daß das Stützteil (25, 36) über radial nach innen ragende Vorsprünge (34, 40) mit den Ausnehmungen in Eingriff ist.

8. Verbindung nach Anspruch 1,
dadurch gekennzeichnet,
daß das Stützteil außerhalb des Stützpolsters eine radial nach innen vorgedrückte Balgwelle aufweist, daß die Balgwelle mit achsparallelen, axial offenen, nutförmigen Ausnehmungen versehen ist, und daß das Innenschutzrohr über radial nach außen ragende Vorsprünge mit den Ausnehmungen in Eingriff ist.

9. Verbindung nach Anspruch 7 oder 8,
dadurch gekennzeichnet,
daß die Vorsprünge (34, 40) durch einen mit dem Stützteil (25, 36) bzw. dem Innenschutzrohr verbundenen Ring (33, 39) gebildet sind.

10. Verbindung nach Anspruch 9,
dadurch gekennzeichnet,
daß der Ring (39) in das Stützteil (36) ein- bzw. auf das Innenschutzrohr aufgesetzt ist.

11. Verbindung nach Anspruch 9,
dadurch gekennzeichnet,
daß Stützteil (25) oder Innenschutzrohr entlang einer Radialebene geteilt sind, daß die Teile (31, 32) durch einen im wesentlichen rohrförmigen Ring (33) miteinander verbunden sind, und daß die Vorsprünge durch Ein- (34) bzw. Ausprägungen des Ringes (33) gebildet sind.

## Claims

1. Articulated connection of pipe parts, particularly in exhaust ductings of motor vehicles, consisting of at least one flexible ducting element connected at least indirectly with the pipe parts and being in the form of a corrugated pipe, metallic bellows, metallic hose or the like as well as an internal protective pipe arranged within the ducting element and secured at one end with the pipe part located there, optionally together with the ducting element; the other, free end of the internal protective pipe being connected via at least one annularly extending supporting cushion having dampedly resilient properties with a supporting part surrounding the latter and secured to the other pipe part in a connection which is guided in an angularly relatively movable mutually supporting manner, wherein the supporting cushion bears on both sides in the axial and radial directions against the inner protective pipe and/or the support part,
characterised in that
the free end of the inner protective pipe (17, 26, 43) and the support part (12, 25, 36) are supported by way of at least one indirectly mutually complementarily shape-locking engagement against relative torsional movements.

2. Connection according to claim 1,
characterised in that
the walling of the inner protective pipe (17) and of the supporting part (12) have respectively radially outwardly projecting and radially inwardly projecting lugs (20, 21; 22, 23) and that the lugs project into the cross-section of the supporting cushion (15, 16).

3. A connection according to claim 2,
characterised in that
the lugs (20, 21; 22, 23) have the shape of ribs extending axially parallel to the pipe connection.

4. Connection according to claim 3,
characterised in that
the supporting cushion (15, 16) is prefabricated with grooves on its outer and inner mantle surfaces corresponding to the ribs (20, 21; 22, 23).

5. A connection according to any one or more of claims 2 to 4,
characterised in that
the lugs (22, 23) of the internal protective pipe (17) are arranged in an offset manner relative to the lugs (20, 21) of the supporting part (12), in particular in the peripheral direction.

6. A connection according to any one or more of claims 2 to 5,
characterised in that
the lugs are formed through radially stamped-out parts (22, 23) of the internal protective pipe (17) and/or radial stamped-in parts (20, 21) of the supporting part (12).

7. A connection according to claim 1,
characterised in that
the free end of the internal protective pipe (26, 43) has radially outwardly precompressed bellows corrugation (28, 42) externally of the supporting cushion (29, 30; 44, 45), in that the bellows corrugation is provided with an axially parallel, axially open groove-like recesses (25, 41), and in that the supporting part (25, 36) is in engagement via radially internally projecting lugs (34, 40) with the recesses.

8. A connection according to claim 1,
characterised in that
externally of the supporting cushion the supporting part has a radially inwardly precompressed corrugated bellows, in that the corrugated bellows is provided with axially parallel, axially open groove-shaped recesses, and in that the internal protective pipe is in engagement with the recesses via radially outwardly projecting lugs.

9. A connection according to claim 7 or 8,
characterised in that
the lugs (34, 40) are formed by a ring (33, 39) connected with the supporting part (25, 36) or the internal protective pipe.

10. A connection according to claim 9,
characterised in that
the ring (39) is inserted into the supporting part (36) or is mounted on the internal protective pipe.

11. A connection according to claim 9,
characterised in that
the supporting part (25) of the internal protective pipe is divided in a radially plane, in that the parts (31, 32) are connected together by way of an essentially pipe-shaped ring (33), and in that the lugs are constituted by stamped-in parts (34) or stamped-out parts of the ring (33).

## Revendications

1. Joint articulé d'éléments de tubes, notamment dans des conduits d'échappement de véhicules automobiles, se composant d'au moins un élément de conduit flexible, relié au moins indirectement avec les éléments de tubes, l'élément de conduit flexible étant sous forme de tube ondulé, de soufflet métallique, de tuyau métallique ou analogue, se composant aussi d'un tube intérieur de protection disposé à l'intérieur de l'élément de conduit, fixé par une extrémité à l'élément de tube qui lui fait face, le cas échéant avec l'élément de conduit, et dont l'autre extrémité libre est en contact porteur réciproque, par l'intermédiaire d'au moins un rembourrage d'appui périphérique annulaire présentant des propriétés élastiques amorties, avec un élément d'appui entourant ce dernier et fixé à l'autre élément de tube, l'extrémité libre et l'élément d'appui étant liés de manière mobile angulairement l'un par rapport à l'autre, le rembourrage d'appui étant en contact à la fois dans la direction axiale et radiale, contre le tube intérieur de protection et/ou l'élément d'appui, caractérisé en ce que l'extrémité libre du tube intérieur de protection (17,26,43) et l'élément d'appui (12, 25, 36) sont soutenus par l'intermédiaire de contacts à emboîtement réciproque au moins indirects, pour prévenir des mouvements de torsion relatifs.

2. Joint selon la revendication 1, caractérisé en ce que la paroi du tube intérieur de protection (17) et la paroi de l'élément d'appui (12) présentent des saillies (20, 21 ; 22, 23) s'étendant radialement respectivement vers l'extérieur et l'intérieur, et en ce que les saillies pénètrent dans le profil transversal du rembourrage d'appui (15, 16).

3. Joint selon la revendication 2, caractérisé en ce que les saillies (20, 21 ; 22, 23) présentent la forme de nervures parallèles à l'axe du joint de tubes.

4. Joint selon la revendication 3, caractérisé en ce que le rembourrage d'appui (15, 16) est préfabriqué avec des rainures au niveau de son enveloppe intérieure et extérieure, correspondant aux nervures (20, 21 ; 22, 23).

5. Joint selon l'une au moins des revendications 2 à 4, caractérisé en ce que les saillies (22, 23) du tube intérieur de protection (17) sont disposées de manière décalée par rapport aux saillies (20, 21) de l'élément d'appui (12), en particulier au niveau de la périphérie.

6. Joint selon l'une ou plus des revendications 2 à 5, caractérisé en ce que les saillies sont formées à partir d'empreintes radiales (22, 23) du tube intérieur de protection (17), et/ou d'empreintes radiales (20, 21) de l'élément d'appui (12).

7. Joint selon la revendication 1, caractérisé en ce que l'extrémité libre du tube intérieur de protection (26, 43) présente, en dehors de la zone du rembourrage d'appui (29, 30 ; 44, 45), un soufflet préformé ondulé radialement vers l'extérieur, en ce que le soufflet est pourvu d'évidements (35, 41) en forme de rainures, parallèles à l'axe et ouverts axialement, et en ce que la pièce d'appui (25, 36) est en prise avec les évidements par l'intermédiaire de saillies (34, 40) radiales dirigées vers l'intérieur.

8. Joint selon la revendication 1, caractérisé en ce que l'élément d'appui présente, en dehors de la zone du rembourrage d'appui, un soufflet préformé ondulé radialement vers l'intérieur, en ce que le soufflet est pourvu d'évidements en forme de rainures, parallèles à l'axe et ouverts axialement, et en ce que le tube intérieur de protection est en prise avec les évidements par l'intermédiaire de saillies radiales dirigées vers l'extérieur.

9. Joint selon la revendication 7 ou 8, caractérisé en ce que les saillies (34, 40) sont formées par l'intermédiaire d'un anneau (33, 39) en relation respectivement avec l'élément d'appui (25, 36) ainsi que le tube intérieur de protection.

10. Joint selon la revendication 9, caractérisé en ce que l'anneau (39) est disposé à l'intérieur de l'élément d'appui (36), respectivement dans ou au-dessus du tube intérieur de protection.

11. Joint selon la revendication 9, caractérisé en ce que l'élément d'appui (25) ou le tube intérieur de protection sont découpés selon un plan radial, en ce que les parties (31, 32) sont liées l'une à l'autre par l'intermédiaire d'un anneau (33) sensiblement tubulaire, en ce que les saillies sont formées par l'intermédiaire d'empreintes de l'anneau (33), respectivement vers l'intérieur (34) ou vers l'extérieur.
